# EUROPEAN PATENT APPLICATION

(11) **EP 2 547 094 A2**
(43) Date of publication of application: **16.01.2013**
(21) Application number: 12173047.7
(22) Date of filing: 21.06.2012
(51) Int. Cl.: H04N 5/253, H04N 5/74, H04N 9/31, G11B 20/10, H04N 5/225, H04N 5/76, G06K 9/00, G11B 20/00

(54) **Forensic method for classifying unauthorised digital movie-projection recaptures**

(30) Priority: 11.07.2011 EP 11305899
(71) Applicant: Thomson Licensing, 92130 Issy-les-Moulineaux (FR)
(72) Inventor: Rolland-Neviere, Xavier, 35576 CESSON-SEVIGNE (FR); Chupeau, Bertrand, 35576 CESSON-SEVIGNE (FR); Doerr, Gwenael, 35576 CESSON-SEVIGNE (FR); Blonde, Laurent, 35576 CESSON-SEVIGNE (FR)
(74) Representative: Huchet, Anne

(57) **Abstract**

The invention relates to a method for classifying video content projection recaptures, recaptured for instance with a personal camcorder, for forensic purposes.
The digital copy of the video content is discriminated, either as recorded from a digital projection of the video content, or as recorded from the projection of a celluloid film of the video content.
The automated method makes use of a discriminating algorithm as a function of fingerprint extracted from the digital copy, the fingerprint being at least one of the features : (i) spatial illumination uniformity, (ii) on-screen vertical stability, and (iii) amplitude of the temporal illumination pulse phenomenon.

## Description

### Field of the invention

The invention relates to the general field of protecting digital content from illegal copying and of identifying the source at the origin of an illegal copy. The domain of the invention is also known under the name of traitor tracing or user forensic.

More particularly, the invention relates to a method for classifying projection recaptures wherein a copy of a video content is classified as recorded from a digital projection of the video content or as recorded from an analog projection of a celluloid print of the video content.

### Back ground of the invention

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Among sources of illegal copy, the capture of a movie performed with a digital recording device (or camcorder) in a movie theater is largely widespread. To deter such in-theater piracy, forensic marks that survive camcording are embedded in projected movies so as to identify the specific cinema where illegal capture occurred. In digital cinema, digital watermarks carrying the theater identity as well as projection date and time are embedded at playback time. In legacy cinema projecting celluloid prints, dots arranged in a unique pattern so as to identify a particular print of a movie are printed on several frames during the manufacturing process.

Thus, when an illegal copy is analyzed, the forensic process to be applied depends on the type of leakage: camcorder capture in a digital cinema, camcorder capture in a conventional cinema, but also DVD rip and others. Classification of incoming illegal copies according to their origin, prior to further specific in-depth forensic analysis, is therefore needed to the whole forensic process. If the decoding of forensic marks is partly or fully automated, there is no such automated way of classifying incoming illegal video copies depending on their origin, especially for projection recaptures copies. Today, visual inspection and manual classification is used to characterize illegal camcorded video content during theatrical movie projections.

Thus known methods for forensics analysis raise the issue of distinguishing illegal copies recorded in digital cinemas and illegal copies recorded in legacy cinemas (celluloid film).

A method for automatically characterizing illegal camcorded video content during theatrical movie projections is therefore needed. Features automatically extracted from the illegal video characterizing whether the illegal video was recorded from a projection of a celluloid film or from a projection of a digital copy are further needed.

### Summary of the invention

To this end, the invention relates to a method for classifying projection recaptures wherein a copy of a video content is classified as recorded from a digital projection of the video content or as recorded from an analog projection of the celluloid print of the video content. The method is remarkable in that the method is fully automated and that the step of classifying is a function of at least one feature among (i) spatial illumination uniformity, (ii) on-screen picture stability, (iii) temporal illumination pulse extracted from a digital representation of the copy. The invention is advantageously well adapted to automatically characterizing illegal video content camcorded during theatrical movie projections. The goal of the invention is to be able to distinguish between illegal copies recorded in digital cinemas and illegal copies recorded in legacy cinemas. The motivation for building such an oracle is to provide valuable insight at the beginning of the forensics analysis in order to switch between different forensic processes accordingly.

In a first preferred embodiment the method comprises a step of extracting the spatial illumination uniformity from the digital representation of the copy, the step of extracting the spatial illumination uniformity further comprising computing a representative frame of the video by temporally averaging luminance frames of the digital representation of the copy. According to particularly advantageous characteristics, the step of extracting the spatial uniformity further comprises cropping-out parts of the representative frame; computing a plurality of spatial average luminance values for angular sectors in concentric rings of the representative frame; normalizing the spatial average luminance values e.g. by the maximum spatial average luminance value; computing the gradient of normalized spatial average luminance values.

In a second preferred embodiment, the method comprises a step of extracting the on-screen picture vertical stability from the digital representation of the copy, the step of extracting the on-screen picture vertical stability further comprising computing a vertical frame offset for each frame of the digital representation of the copy belonging to a stable segment of the copy. According to particularly advantageous characteristics, the step of extracting the vertical stability comprises computing a global statistic on each frame of the digital representation of the copy; extracting shot boundaries to determine a plurality of shots in the digital representation from global statistics; isolating stable segments within each shot comprising at least F frames from global statistics; discarding stable segments whose temporal activity, measured from the global statistics, exceeds a determined threshold; applying a global motion estimator on each frame of each stable segments resulting in the global horizontal and vertical frame offset ; selecting N segments with the lowest offset variations; computing an average of variance on the vertical frame offset for each N selected segment. ; computing a histogram of the vertical frame offset for each N selected segment.

In a third preferred embodiment, the method comprises a step of extracting the temporal illumination pulse from the digital representation of the copy, the step of extracting the temporal illumination pulse further comprising computing an average value along each line of luminance frames of the digital representation of the copy. According to particularly advantageous characteristics, the step of extracting the temporal illumination pulse further comprises applying a first temporal derivative filter on the line luminance average values resulting in the temporal derivative of the luminance average values along the rows of the frame; clipping the time derivative luminance average values to a threshold d; computing a temporal Fourier transform on each clipped time derivative luminance average values; computing the average of all the Fourier transform spectrum magnitudes; applying a low pass filter; extracting the amplitude, width and location of the N most significant peaks of the average of temporal Fourier transform magnitude.

### Brief description of the drawings

Other characteristics and advantages of the invention will appear through the description of a non-limiting embodiment of the invention, which will be illustrated, with the help of the enclosed drawings.

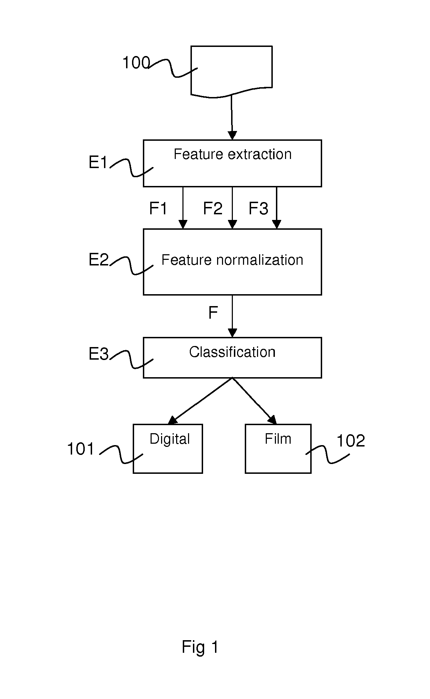

- **Figure 1** illustrates the method for classifying projection recaptures.

In the figure, the represented blocks are purely functional entities, which do not necessarily correspond to physically separate entities. These functional entities may be implemented as hardware, software, or a combination of software and hardware; furthermore, they may be implemented in one or more integrated circuits.

### Detailed description of preferred embodiments

Each feature or variant disclosed in the description, in the claims or in the drawings may be provided independently or in any appropriate combination.

**Figure 1** illustrates the method for classifying projection recaptures. Any classification is a function of an input vector; however the classification method is out of the scope of the present invention. The invention merely lies in the extraction of relevant features for the classifier and results in separating incoming data between the two targeted classes. Any state-of-the art statistical classifier is compatible with the invention. In the context of the classification of copies from projection recaptures, the following features have been considered:
- Features capturing the spatial illumination uniformity of the projected video sequence;
- Features capturing the vertical on-screen picture (in)stability of projected video sequence;
- Features capturing the temporal illumination pulse of recaptured video sequence.

In a first step E1, the features F1, F2, F3 are extracted from the copy 100. In a second step E2, the features F1, F2, F3 are normalized and concatenated into a multidimensional numerical vector F. The resulting features vector F is then input to a state-of-the-art supervised classification system in a step E3. The classifier is advantageously previously trained during a learning phase. The learning phase provides both the feature normalization parameters such as the mean and standard deviation for each feature and the classifier decision boundaries. After the classification step E3, the copy 100 of a recaptured video content is either classified as recorded from the digital projection of the video content 101 or classified as recorded from the projection of the film (i.e the celluloid print) of the video content 102. The term "celluloid print" or "film" is equally used in the description. The term "copy", "digital representation of the copy" or "video sequence" is also equally used in the description.

Hereafter, the rationale for the features choice based on observed artefacts and the feature extraction is detailed for each proposed feature.

### Spatial illumination uniformity feature extraction

The spatial illumination uniformity of digital cinema projectors, as enforced by the Digital Cinema Initiatives specification, is significantly higher than what is attainable with film projectors. Statistics are therefore extracted by capturing such property in the captured video sequence.

All luminance frames Y of the video sequence are first combined to yield a single representative frame Yᵣₑₚ. In a variant, the representative frame could simply be the temporal average of the individual frames of the video. The temporal averaging process is expected to attenuate interferences from the content and the representative frame Yᵣₑₚ should converge toward a flat uniform image in case of uniform lighting. In contrast, in case of non uniform lighting, the representative frame should converge toward an image made of concentric uniform rings centered at the projection center.

In another variant, the representative frame Yᵣₑₚ could be obtained by:
- Temporally averaging the p% brightest pixels of the frames Y (e.g. p=20);
- Temporally averaging the p% brightest pixels of the video sequence;
- Temporally averaging in each pixel location, the p% brightest pixels in the video sequence.

In an optional step, the computed representative frame Yᵣₑₚ is then post-processed to facilitate subsequent feature extraction. A typical post-processing operation is to crop-out parts of the camcorded copy that do not capture projected video content e.g. the top and bottom portions of video corresponding to parts below and above the cinema screen that happen to be captured at the same time. These parts of the representative frame Yᵣₑₚ can be characterized by their lower temporal activities and can be automatically cropped out based on some thresholding operation that considers the temporal variance averages along lines and/or columns.

Finally, discriminating features are extracted from the post-processed representative frame Z in order to capture the spatial uniformity (or the absence thereof) of the illumination. At the moment, the following features have been considered:
- the b₀-bins (e.g. b₀=10) histogram H₀ of the luminance values of the frame Z;
- the gradient of the b₀-bins histogram H0;
- the average luminance values taken from regions of the frame Z with increasing distance from the center such as r concentric rings (e.g. r=10) further split into angular sectors to guarantee that all regions spread the same area. The variation of brightness between angular sectors inside one ring is also computed. We can then check for potential interferences from other factors (other light sources for instance) ;
- the gradient of the r average luminance values taken from regions with increasing distance from the center;
- a combination of the above.

There may be some normalization steps involved in the feature extraction process in order to guarantee some calibration across movies. For instance, one could normalize average luminance values by their maximum values.

In a preferred embodiment, the step of extracting the spatial uniformity comprises :
- computing a representative frame from temporal average of luminance frames of the digital representation of the copy;
- cropping-out parts of the representative frame;
- normalizing the spatial average luminance values by the maximum spatial average luminance value ;
- computing a plurality of spatial average luminance values for concentric angular vectors of the representative frame; computing the gradient of normalized spatial average luminance values.

### Vertical on-screen picture stability feature extraction

In celluloid film projections, it is very common to observe a slight vertical instability. This instability is due to the film sprocket-hole mechanism and manifests itself as a pseudo-periodic, mostly vertical, sub-pixel interframe global motion. Statistics are therefore extracted by capturing such property in the captured video sequence.

Since global motion estimators perform better on video sequence with low motion activity, it is common practice to isolate segments of the analyzed video sequence where there is very little activity. To do so, the video is first inspected using global statistics in order to pinpoint strong discontinuities indicating shot boundaries. Known global statistics are for instance the frame average luminance value, the frame luminance histogram, the frame RASH descriptor as detailed in *"*A video fingerprint based on visual digest and local fingerprint" from A. Massoudi et al. in IEEE international Conference on Image Processing. Next, within each shot, the *f*-frames long segment (e.g. *f*=50) with low temporal activity according to the considered global statistic is retained. This could be f frames surrounding the most stable frames in the shot. Alternatively, it could also be the segment of *f* frames whose overall activity is the lowest in the shot.

At this stage, the collection of retained low-activity segments can be further trimmed down by discarding all segments whose activity, as measured by the considered global statistic, exceeds some pre-defined threshold *T*_{activity}.

Each f frames-long remaining segment S is then fed into a global motion estimator, for instance using a phase correlation algorithm, which returns, for each frame of the segment, a global vertical and horizontal offset with reference to one selected frame in S.

This estimation could be corrupted when the camcorder was moved during the capture, for instance when the camcorder is handheld. To alleviate this issue, segments for which "large" global motion is detected can be discarded. Indeed the pseudo-periodic jitter induced by the deteriorated sprocket-holes is expected to yield very low amplitude vertical motion and any segment whose global motion exceeds at some point a threshold *T*_{motiong} could be discarded. Alternatively, one could select the *N*ₘₒₜᵢₒₙ segments with the lowest vertical or horizontal motion considering the maximum amplitude or the variance.

After this last clean-up operation, features are derived from the *f-*dimensional vertical motion vectors extracted from the retained low activity segments. According to different variants, the following features have been considered:
- average of the vertical, and optionally horizontal, motion variance across the different segments;
- average of the difference between the maximum and minimum vertical offsets across the different segments;
- The averaged FFT of the vertical global offset.
- Histogram of the vertical offset

In a preferred embodiment, the step of extracting the on-screen picture vertical stability comprises:
- computing a global statistic on each frame of said digital representation of said copy;
- extracting shot boundaries to determine a plurality of shots in said digital representation from said global statistics;
- isolating stable segments within each shot comprising at least f frames from said global statistics;
- discarding stable segments whose temporal activity, measured from said global statistics, exceeds a determined threshold;
- applying a global motion estimator on each frame of each stable segments resulting in said vertical frame offset, for instance using a phase correlation algorithm ;
- selecting N segments with the N lowest values of frame offset variations;
- computing an average of variance on the vertical frame offset for each N selected segment or computing the average of the Fourier transform of each segment sequence of vertical offsets, or computing the histogram of each segment sequence of vertical offsets.

### Temporal illumination pulse feature extraction

During projection, a camcorder and a projector are never fully synchronized temporally. Firstly, the acquisition frequency and the projection frequency always differ by at least a small amount. Secondly, and possibly more critically, there is also a phase difference between the camcorder and the projector that is to say their clocks are not aligned. As a result, the frames of the camcorded video sequence partly integrate the period of darkness created by the shutter of the projector in-between two successive projected frames. This frequency difference creates a periodical global luminance variation. Since the period of darkness when the shutter interrupts the light in a film projector (during film advance between two successive frames) is much longer compared to the corresponding period in a digital projector, the resulting pulse phenomenon is more important in captures of film projections.

Depending on the intrinsic parameters of the camera (sensor type, acquisition frequency, etc), the above mentioned temporal illumination pulse may reveal itself in different forms for instance a global luminance pumping effect or a large dark horizontal band going down. In any case, it should introduce some statistical artifacts along the time axis.

In a first step, the luminance frames of the video are averaged along the rows of the frames. As a result, the video can be represented as a *R*×T matrix M, where R is the number of pixel rows in the video sequence and T the number of frames in the video sequence. In this representation, a global luminance pumping effect would be revealed by regular vertical dark bands. Similarly, a dark horizontal band moving down the screen would be revealed by slightly inclined dark bands in this representation.

In an optional step, the matrix M is then post-processed to facilitate subsequent feature extraction. A typical post-processing operation is to crop-out parts of the camcorded copy that do not capture projected video content e.g. the top and bottom portions of video corresponding to parts below and above the cinema screen that happen to be captured at the same time. These parts of the matrix M can be characterized by their lower temporal activities and can be automatically cropped out based on some thresholding operation that considers the temporal variance along rows.

To diminish the impact of host interference, a first derivative filter is applied to M to obtain the time derivative D of the frames averaged along the rows.

In order to attenuate undesired artifacts at shot boundaries, the values of D are clipped at a preset value d. In other words, all values of D whose absolute values exceed d are set to ±d.

At this stage, a Fourier transform is applied to the rows of D in order to reveal unexpected frequencies in the spectrum introduced by the temporal illumination pulse. It should be noted that enforcing this row by row strategy permits to alleviate any issue related to possible frame interleaving. In order to get more stable statistics, the magnitude of the spectrums are then averaged along the columns in order to obtain the average spectrum magnitude of the time derivative of the rows average luminance. Again, it should be noted that averaging magnitude instead of the full spectrums allows to get rid of any problem due to possible phase differences between rows. The resulting average spectrum is subsequently low-pass filtered.

Features are then derived from this low-pass average spectrum. In different variants, the following features have been considered:
- the amplitude of the *N*ₚ most significant peak of the average spectrum;
- the width of the *N*ₚ most significant peak of the average spectrum;
- the frequency of the *N*ₚ most significant peak of the average spectrum;
- a combination of the above.

In a preferred embodiment, the step of extracting the temporal illumination pulse comprises:
- for each frame of the video sequence, computing the average luminance along the lines;
- applying a first temporal derivative filter on the luminance average values resulting in time derivative luminance average values ;
- clipping the time derivative luminance average values to a threshold d;
- computing a temporal Fourier transform on each clipped time derivative values by applying a *N*_{FFT}-point FFT along the time axis (e.g. *N*_{FFT} =1024) and keeping the spectrum magnitude;
- computing an average on the columns of the spectrum magnitude;
- applying a low-pass filter;
- extracting the amplitude, width, and location of the N most significant peaks of the average spectrum.

Naturally, the invention is not limited to the embodiments previously described.

In particular, the invention is compatible with any other application than forensic analysis which needs to distinguishing digital copies of a movie either issued from a digital projection or a celluloid film projection.

## Claims

1. Method for classifying projection recaptures **characterized in that** a copy of a video content is classified as recorded from a digital projection of the video content or as recorded from an analogue projection of the celluloid print of the video content, the method comprising
- a step of extracting (E1) a first feature (F1) representative of a spatial illumination uniformity from said digital representation of said copy; wherein the step of extracting the spatial illumination uniformity further comprises
o computing a representative frame from temporal average of luminance frames of said digital representation of said copy
o cropping-out parts of said representative frame;
o computing a plurality of spatial average luminance values for angular sectors of equal surface in concentric rings of the representative frame;
o computing the gradient of spatial average luminance values.
- a step of classifying (E3) as a function of said first feature extracted from a digital representation of said copy.

2. Method for classifying projection recaptures **characterized in that** a copy of a video content is classified as recorded from a digital projection of the video content or as recorded from an analogue projection of the celluloid print of the video content, the method comprising
- a step of extracting (E1) a second feature (F2) representative of the vertical on-screen picture stability from said digital representation of said copy wherein the step of extracting the vertical on-screen picture stability further comprising computing a vertical frame offset for each frame of said digital representation of said copy belonging to a stable segment of said copy;
- a step of classifying (E3) as a function of said second feature extracted from a digital representation of said copy.

3. Method according to claim 2 **characterized in that** a step of extracting (E1) the feature representative of the vertical on-screen picture stability comprises :
• computing a global statistic on each frame of said digital representation of said copy;
• extracting shot boundaries to determine a plurality of shots in said digital representation from said global statistics;
• isolating stable segments within each shot comprising at least f frames from said global statistics;
• applying a global motion estimator on each f frames of each stable segments resulting in a global frame offset for each f frames ;
• selecting N segments with the N lowest frame offset variations;
• computing a histogram of the vertical frame offset for each N selected segment.

4. Method for classifying projection recaptures **characterized in that** a copy of a video content is classified as recorded from a digital projection of the video content or as recorded from an analog projection of the celluloid print of the video content, the method comprising
- a step of extracting (E1) a third feature (F3) representative of a temporal illumination pulse phenomenon from said digital representation of said copy, the step of extracting the temporal illumination pulse further comprising computing an average value along each line of luminance frames of said digital representation of said copy;
- a step of classifying (E3) as a function of said third feature extracted from a digital representation of said copy.

5. Method according to claim 4 **characterized in that** a step of extracting (E1) the temporal illumination pulse further comprises :
• applying a temporal first derivative filter on said line luminance average values resulting in time derivative luminance average values ;
• clipping the time derivative luminance average values to a threshold d;
• computing a temporal Fourier transform on each clipped time derivative luminance average values ;
• averaging all the temporal Fourier transform magnitudes;
• applying a low pass filter to the average Fourier transform;
• extracting the amplitude, width and location of the N most significant peaks of said average of temporal Fourier transform magnitude.
